# EUROPEAN PATENT SPECIFICATION

(11) **EP 1 440 373 B1**
(45) Date of publication and mention of the grant of the patent: **06.10.2010**
(21) Application number: 02759319.3
(22) Date of filing: 09.08.2002
(51) Int. Cl.: G06F 12/14

(54) **METHOD AND APPARATUS FOR PHYSICAL ADDRESS-BASED SECURITY TO DETERMINE TARGET SECURITY**
VERFAHREN UND VORRICHTUNG FÜR PHYSIKALISCHE ADRESSBASIERTE SICHERHEIT ZUR BESTIMMUNG DER ZIEL-SICHERHEIT
PROCEDE ET APPAREIL DE SECURITE SE BASANT SUR L'ADRESSE PHYSIQUE POUR DETERMINER LA SECURITE D'UNE CIBLE

(30) Priority: 31.10.2001 US 999881
(43) Date of publication of application: 28.07.2004
(73) Proprietor: GlobalFoundries, Inc., Grand Cayman KY1-1104 (KY)
(72) Inventor: BARNES, Brian, C., Round Rock, TX 78664 (US); STRONGIN, Geoffrey, S., Austin, TX 78731 (US); SCHMIDT, Rodney, W., Drippings Springs, TX 78620 (US)
(74) Representative: Picker, Madeline Margaret
(86) International application number: PCT/US2002/025401
(87) International publication number: WO 2003/038573

(56) References cited:
- GB-A- 2 356 469
- CHIUEH T ET AL: "INTEGRATING SEGMENTATION AND PAGING PROTECTION FOR SAFE, EFFICIENT AND TRANSPARENT SOFTWARE EXTENSIONS" OPERATING SYSTEMS REVIEW (SIGOPS), ACM HEADQUARTER. NEW YORK, US, vol. 33, no. 5, December 1999 (1999-12), pages 140-153, XP000919654

## Description

### TECHNICAL FIELD

This invention relates generally to computer systems operations, and, more particularly, to a method and apparatus for performing a physical address-based security scheme to provide a secure memory access.

### BACKGROUND ART

Operating Systems Review (SIGOPS), ACM Headquarter, New York, US, Volume 33, No. 5, December 1999, pages 140-153 by Chiueh T *et al* entitled "Integrating Segmentation and Paging Protection for Safe, Efficient and Transparent Software Extensions" describes an intra-address space protection mechanism called Palladium, which is implemented using the segmentation and paging protection hardware of the x86 architecture of Intel Corporation. A segment privilege level of a currently executing code is stored in the last two bits of a code segment register. Protection checks at both segment and page levels are performed, in accordance with the x86 architecture.

Computers or computing systems are important elements in many of today's industrial and home applications. Many systems, such as manufacturing systems, power systems, product distribution systems, document systems, etc., are powered by computer systems that utilize processors. These processors perform a variety of tests and execute a plurality of software programs that interact with each other. Many times input/output devices permit manipulation of operations of processors and software programs. A standard level of security is desirable during operation of the processor such that certain software structures (*e.g*., software objects, subroutines, standalone programs, etc.) can be controlled and given priority over other software structures. Many times, access to certain software structures and certain processor functions is restricted in order to prevent unauthorized or inadvertent access or operation by processors. Current computer architectures include a scheme for utilizing virtual memory that uses several system-defined tables that are resident in the physical memory within a computer system. The entry within these system tables is generally pre-defined and includes reserved sections that restrict access to certain software structures.

Computing systems have evolved from single task devices to multitask devices. A computing system employs an operating system to execute the many tasks and manage their resource utilization. Typically, when a user invokes a process (*e.g*., opens an application program such as a word processor), the operating system dedicates certain computing resources (*e.g*., portions of memory) for use by the task. Many computing resources, however, cannot, or are not, dedicated in this manner. Printer drivers, for example, are frequently used by multiple tasks. Operating systems, therefore, also usually define access rights and protocols for tasks relative to such shared resources. Thus, by virtue of the operating system's efforts, computing systems can simultaneously execute multiple tasks in an efficient manner.

One important aspect in such a computing environment is "security". Computing systems that multitask employ security and protection services to protect their operating system from user processes, and to protect the processes from each other. Without protection, a rogue program could unintentionally destroy the program code or data in the memory space belonging to the operating system or to another process. Note that, at least in this context, security does not imply thwarting intentional malicious acts, although it contemplates protecting against these as well.

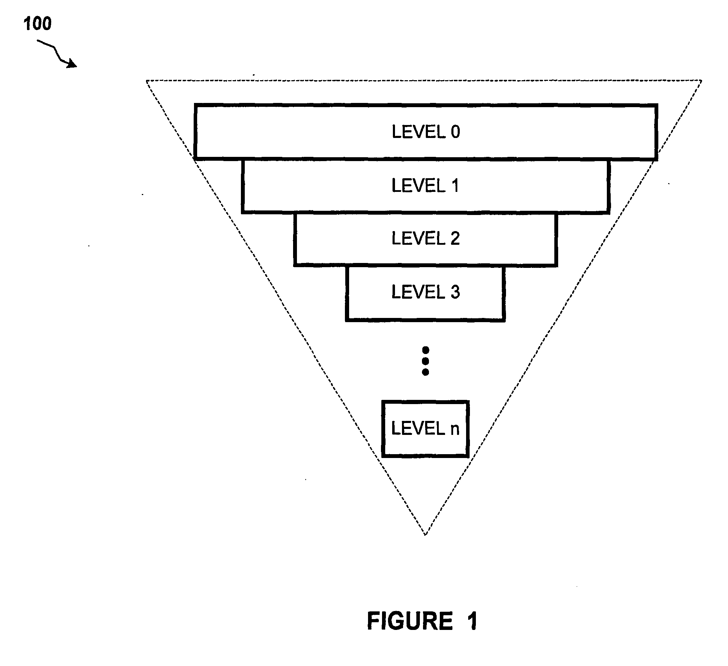

Many processors, such as x86 processors, provide a plurality of security levels, such as privilege levels. Turning now to Figure 1, one example of the representation of a plurality of security levels is illustrated. The inverse pyramid styled structure in Figure 1 illustrates four levels of security (privilege) level 0, level 1, level 2, and level 3. The operating system is afforded a base privilege level such as level 0. The privilege afforded by the security level 0 allows a particular software structure to obtain access provided by subsequent security levels such as levels 1-3. If a software structure is allowed only a privilege of security level 2, that particular software structure only has access and control over operations that are afforded by privilege levels 2 and 3. In many cases, popular operating systems, such as Microsoft Windows^{®}, do not utilize the full capabilities of the plurality of privilege levels. Some software operating systems only use two privilege levels, such as level 0 and level 3.

A user application program may execute at security level 3, while the operating system services and all drivers operate at security level 0. This can open the computer system to a variety of security risks. This is particularly true since most drivers have access to all of the computer resources because they are operating at the most privileged level, security level 0. Therefore, an unauthorized access to a driver that controls a device in the computer system, such as a modem device, can cause unauthorized operation of the modem resulting in system destruction. Furthermore, unauthorized access to system memory can cause loss of valuable data and software programs.

The present invention is directed to overcoming, or at least reducing the effects of, one or more of the problems set forth above.

### DISCLOSURE OF INVENTION

In one aspect of the present invention, a method is provided for performing a virtual memory access. A software object is executed. A security level for the software object is established. A multi-table memory access using at least one of the security levels is performed. The function of the object is executed.

In another aspect of the present invention, an apparatus is provided performing a virtual memory access. The apparatus of the present invention comprises: a processor coupled to a bus; means for coupling at least one software object to the processor; a memory unit; and a memory access interface coupled to the bus and the memory unit, the memory access interface to provide the processor a multi-level table memory access of at least a portion of the memory unit based upon at least one security level in response to the processor executing the software object.

### BRIEF DESCRIPTION OF THE DRAWINGS

The invention may be understood by reference to the following description taken in conjunction with the accompanying drawings, in which like reference numerals identify like elements, and in which:
Figure 1 illustrates a stylistic representation of a plurality of privilege levels for secured access in a computer system;
Figure 2 is a block diagram of a computer system that may be utilized in accordance with one embodiment of the present invention;
Figure 3 is a more detailed block diagram representation of a processing unit shown in Figure 2, in accordance with one embodiment of the present invention;
Figure 4 is a more detailed block diagram representation of a memory access interface shown in Figure 3, in accordance with one embodiment of the present invention;
Figures 5A and 5B illustrate a block diagram representation of a memory access performed by the processor illustrated in Figures 1-4;
Figure 6 illustrates a flowchart depiction of a method of performing memory access using a security scheme in accordance with one embodiment of the present invention;
Figure 7 illustrates a flowchart depiction of a method of performing a multi-table memory access described in Figure 6, in accordance with one embodiment of the present invention;
Figure 8 illustrates a flowchart depiction of a method of setting up a secondary table described in Figure 7, in accordance with one embodiment of the present invention;
Figure 9 illustrates a flowchart depiction of a method of performing a multi-level table access described in Figure 7, in accordance with one embodiment of the present invention;
Figure 10 illustrates a flowchart depiction of a method of determining a security level in the secondary table described in Figure 9, in accordance with one embodiment of the present invention; and
Figure 11 illustrates a flowchart depiction of a method of facilitating appropriate memory access in response to the multi-level table access described in Figure 7, in accordance with one embodiment of the present invention.

While the invention is susceptible to various modifications and alternative forms, specific embodiments thereof have been shown by way of example in the drawings and are herein described in detail.

### MODE(S) FOR CARRYING OUT THE INVENTION

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

As shown in Figure 1, embodiments of the present invention provide for memory access using security access systems. Embodiments of the present invention provide for a multiple memory access table system to provide security during a memory access initiated by one or more processors in a computer system. Embodiments of the present invention also provide a virtual memory access system that utilizes a primary virtual memory access table and a secondary memory access table, which results in increased security during memory accesses.

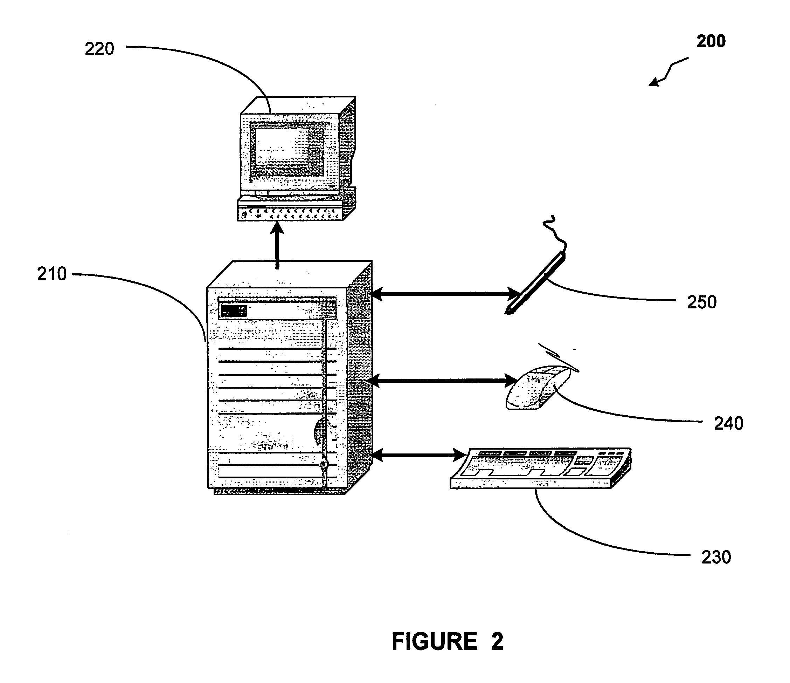

Turning now to Figure 2, one embodiment of a system 200 in accordance with the present invention is illustrated. The system 200 comprises a processing unit 210; a plurality of input/output devices, such as a keyboard 230, a mouse 240, an input pen 250; and a display unit 220, such as a monitor. The security level system disclosed by the present invention, in one embodiment, resides in the processing unit 210. An input from one of the input/output devices 230, 240, 250 may initiate the execution of one or more software structures, including the operating system, in the processing unit 210. Memory residing in the system 200 is then accessed to execute the various software structures residing in the processing unit 210. Embodiments of the present invention restrict memory access initiated by one or more software structures, based upon predetermined security entries programmed into the system 200.

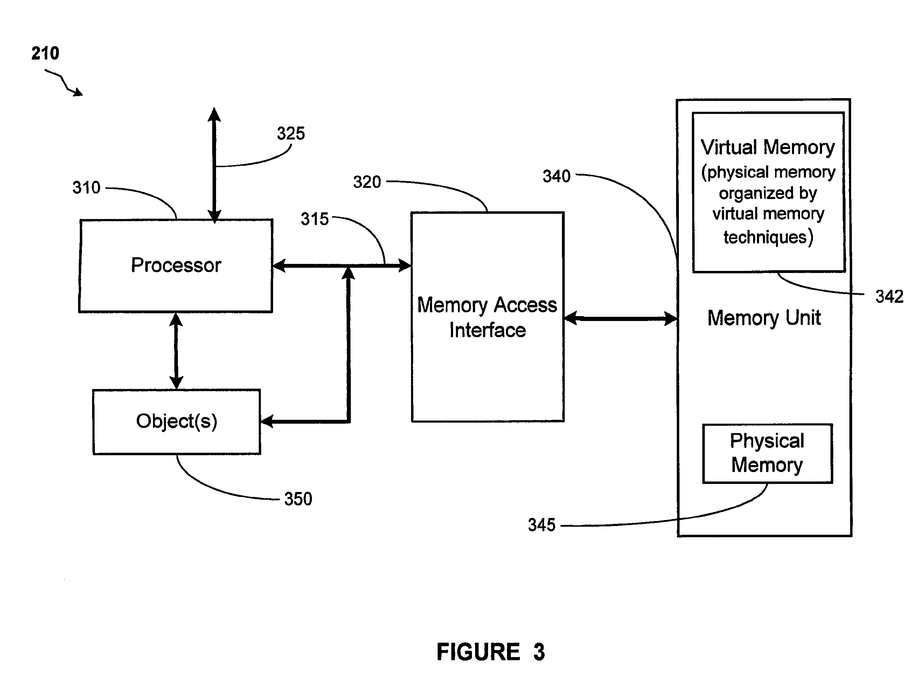

Turning now to Figure 3, a simplified block diagram of one embodiment of the processing unit 210 in accordance with the present invention, is illustrated. The processing unit 210 in one embodiment, comprises a processor 310, a memory access interface 320, a memory unit 340, and programmable objects 350, such as software objects or structures. The processor 310 may be a microprocessor, which may comprise a plurality of processors (not shown). The memory unit 340 comprises a physical memory section 345, that comprises physical memory such as magnetic tape memory, flash memory, random access memory, memory residing on semiconductor chips, and the like. The memory residing on semiconductor chips may take on any of a variety of forms, such as a synchronous dynamic random access memory (SDRAM), double-rate dynamic random access memory (DDRAM), or the like. The processor 310 communicates with the memory unit through the system memory access interface 320. In one embodiment, the memory access interface 320 is of a conventional construction, providing memory addresses and logic signals to the memory unit 340 to characterize the desired memory transactions.

The processor 310, in one embodiment, is coupled to a host bus 315. The processor 310 communicates with the memory access interface 320 and the objects 350 via the host bus 315. The memory access interface 320 is coupled to the host bus 315 and the memory unit 340. The processor 310 is also coupled to a primary bus 325 that is used to communicate with peripheral devices. In one embodiment, the primary bus 325 is a peripheral component interconnect (PCI) bus (see PCI Specification, Rev. 2.1). A video controller (not shown) that drives the display unit 220 and other devices (*e.g*., PCI devices) are coupled to the primary bus 325. The computer system 200 may include other buses such as a secondary PCI bus (not shown) or other peripheral devices (not shown) known to those skilled in the art.

The processor 310 performs a plurality of computer processing operations based upon instructions from the objects 350. The objects 350 may comprise software structures that prompt the processor 310 to execute a plurality of functions. In addition, a plurality of subsections of the objects 350, such as operating systems, user interface software systems, such as Microsoft Word^{®}, and the like, may simultaneously reside and execute operations within the processor 310. Embodiments of the present invention provide for a security level access and privilege for the processor 310.

In response to execution of software codes provided by the objects 350, the processor 310 performs one or more memory accesses in order to execute the task prompted by the initiation of one or more objects 350. The memory access performed by the processor 310 includes accessing memory locations for storage of execution codes and memory access to acquire data from stored memory locations. Many times, certain data stored in particular memory locations are restricted for access by one of a few selected objects 350. Embodiments of the present invention provide for multi-table security access to restrict access to particular memory locations in the system 200. The processor 310 performs memory access via the memory access interface 320. The memory access interface 320 provides access to the memory unit 340, which may comprise physical memory 345 and virtual memory 342 (i.e., physical memory organized using virtual memory techniques known to those skilled in the art having the benefit of the present disclosure). A multi-table virtual memory access protocol is provided by at least one embodiment of the present invention.

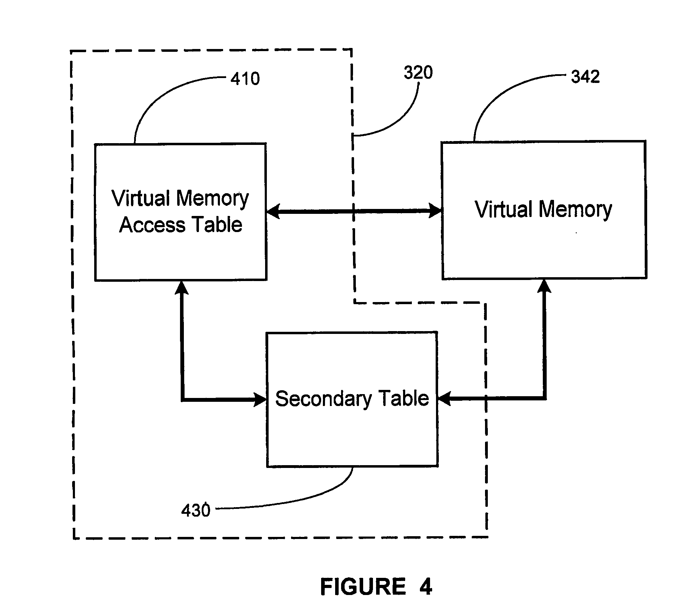

Turning now to Figure 4, a block diagram depiction of one embodiment of the memory access interface 320 in accordance with the present invention, is illustrated. In one embodiment, the memory access interface 320 comprises a virtual memory access table 410 and a secondary table 430. Embodiments of the present invention provide for performing memory access using a virtual memory system. The virtual memory system utilized by embodiments of the present invention uses a multilevel table addressing scheme *(i.e.,* using the virtual memory access table 410 in conjunction with the secondary table 430) to access virtual memory addresses. The virtual memory addresses are used by the processor 310 to locate the desired physical memory location.

The system 200 utilizes the virtual memory access table 410 in combination with at least one other table, such as the secondary table 430, to define a virtual memory address. The virtual memory access table 410 and the secondary access tables 430 are used to translate virtual memory addresses (linear addresses) that lead to a physical memory address. The physical memory address points to a memory location in the physical memory 345. The multi-level memory table system provided by embodiments of the present invention allows the secondary table 430 to define entire sections of the virtual memory access table 410. In some instances, the secondary table 430 may define a portion of virtual memory address that may not be present in the virtual memory access table 410. The secondary table 430 can be used as a fine-tuning device that further defines physical memory location based upon a virtual memory address generated by the virtual memory access table 410. This will result in more accurate and faster virtual memory address definitions.

In one embodiment, the secondary table 430, which may comprise a plurality of sub-set tables within the secondary table 430, is stored in the physical memory 340, shown in Figure 3, or the main memory (not shown) of the system 200. The secondary tables 430 are stored at high security levels to prevent unsecured or unverified software structures or objects 350 to gain access to the secondary table 430. In one embodiment, the processor 310 requests access to a location in the physical memory 345 based upon instructions sent by an object 350. In response to the memory access request made by the processor 310, the memory access interface 320 prompts the virtual memory access table 310 to produce a virtual memory address, which is further defined by the secondary table 430. The virtual memory address then points to a location in the virtual memory 342. The processor 310 then requests an access to the virtual memory location, which is then used to locate a corresponding location in the physical memory 345.

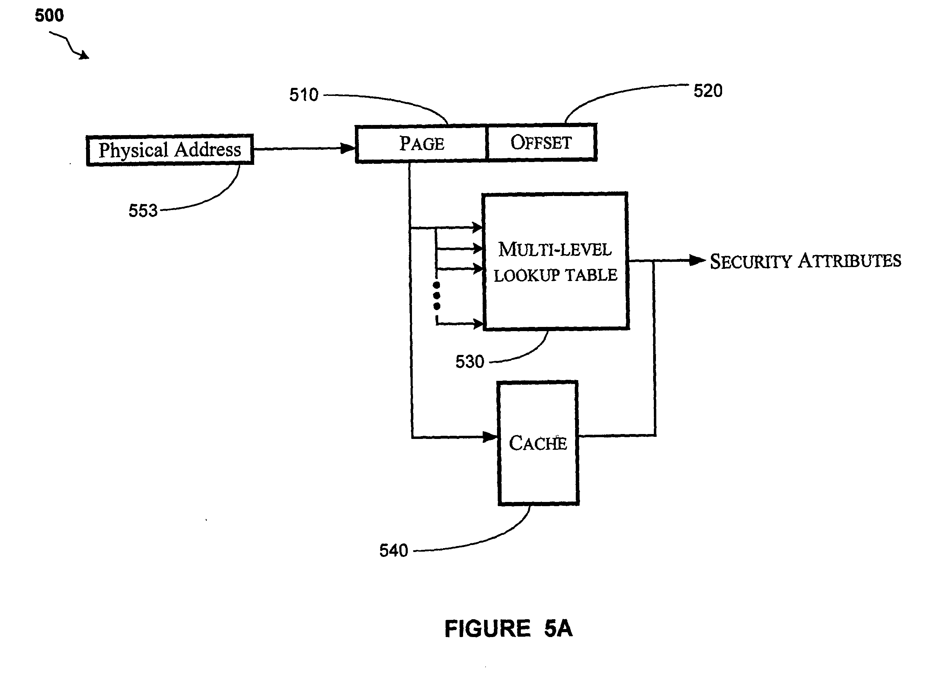

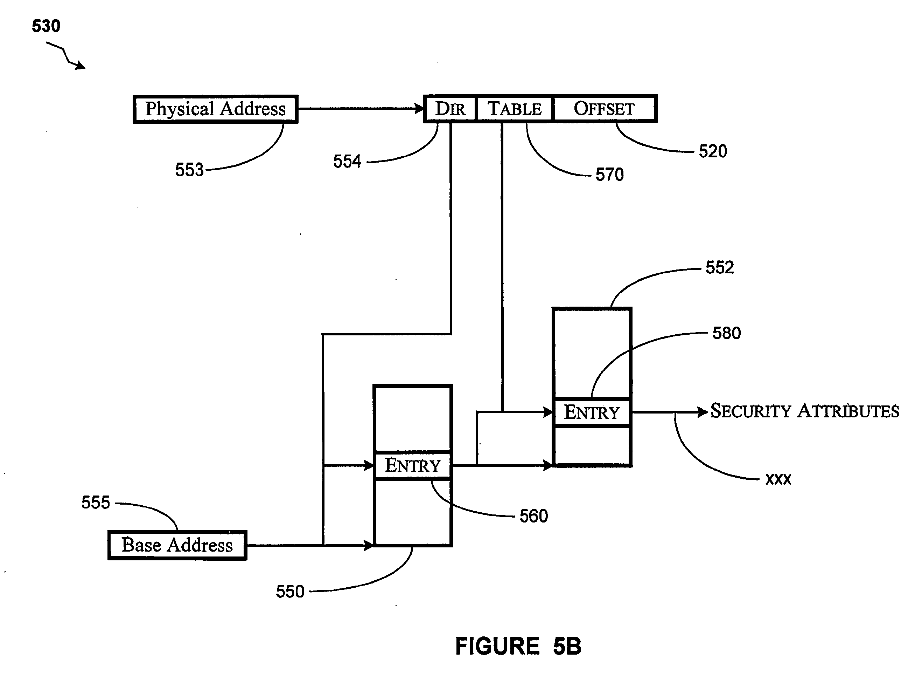

One embodiment of performing the memory access performed by the processor 310, is illustrated in Figure 5A, Figure 5B, and by the following description. Turning now to Figure 5A, one illustrative embodiment of a memory system 500 for storing and retrieving security level attributes in a data processor or computer system is shown. In one embodiment, the memory system 500 is integrated into the processing unit 210 in the system 200. The memory system 500 is useful in a data processor (not shown) that uses a virtual addressing scheme for accessing memory. For example, the memory system 500 may be used by the processor 310 when addressing memory using a paging scheme, such as paging schemes implemented in x86 type microprocessors. In one embodiment, a single memory page in an x86 system comprises 4 Kbytes of memory. Moreover, the memory system 500 finds particular applications in the processor 310 that assigns appropriate security level attributes at the page level.

The memory system 500 receives a physical address 553 that is composed of a page portion 510 and an offset portion 520, as opposed to a virtual, linear, or intermediate address that would be received by a paging unit in an x86 type microprocessor. In one embodiment, the page portion 510 data addresses an appropriate memory page, while the offset portion 520 data addresses a particular offset memory location within the selected page portion 510. The memory system 500 receives the physical address 553, such as would be produced by a paging unit (not shown) in an x86 type microprocessor.

A multi-level lookup table 530, which is generally referred to as the extended security attributes table (ESAT), receives the page portion 510 of the physical address. The multi-level lookup table 530 stores security attributes associated with each page of memory. In other words, each page has certain security level attributes associated with that page. In one embodiment, the security attributes associated with the page are stored in the multi-level lookup table 530. For example, the security attributes associated with each page may include look down, security context ID, lightweight call gate, read enable, write enable, execute, external master write enable, external master read enable, encrypt memory, security instructions enabled, etc. Many of these attributes are known to those skilled in the art that have the benefit of the present disclosure.

In one embodiment, the multi-level lookup table 530 is located in the system memory (not shown) of system 200. In an alternative embodiment, the multi-level lookup table 530 is integrated into the processor 310, which includes a microprocessor that employs the system 200. Accordingly, the speed at which the multi-level lookup table 530 is capable of operating is, at least in part, dependent upon the speed of the system memory. The speed of the system memory, as compared to the speed of the processor 310, is generally relatively slow. Thus, the process of retrieving the security attributes using the multi-level lookup table 530 may slow the overall operation of the system 200. To reduce the period of time required to locate and retrieve the security attributes, a cache 540 is implemented in parallel with the multi-level lookup table 530. The cache 540 may be located on the same semiconductor die as the processor 310 (*i.e.,* the cache and the processor 310 being integrated on one semiconductor chip) or external to the processor die. Generally, the speed of the cache 540 may be substantially faster than the speed of the multi-level lookup table 530. The cache 540 contains smaller subsets of the pages and their security attributes contained within the multi-level lookup table 530. Thus, for the pages stored in the cache 540, the operation of retrieving the security attributes may be substantially enhanced.

Turning now to Figure 5B, one embodiment of the multi-level lookup table 530 used for storing and retrieving the security attributes associated with a page in memory is illustrated. The multi-level lookup table 530 comprises a first table 550, which is generally referred to as an ESAT directory, and a second table 552, which is generally referred to as the ESAT. Generally, the first table 550 contains a directory of starting addresses for a plurality of ESATs 552 in which the security attributes for each of the pages is stored. In the embodiment illustrated herein, a single ESAT directory 550 may be used to map the entire memory.

A first portion of the physical address 553, which includes the highest order bits and is generally referred to as the directory (DIR) 554, is used as a pointer into the first table 550. The physical address 553 may also comprise a portion that contains table data 570, which can identify the table 550, 552 being addressed. The physical address 553 further comprises the offset 520 within a table 550, 552 that leads to a particular entry 560, 580. The first table 550 is located in the system memory at a base address 555. The DIR portion 554 of the physical address 553 is added to the base address 555 to identify an entry 560, which points to a base address of an appropriate address in one of the second tables 552. In one embodiment, a plurality of the second tables 552 may be present in the multi-level lookup table 530. Generally, each one of the entries 560 in the first table 550 points to a starting address of one of the addresses in the second tables 552. In other words, each entry 555 may point to its own separate ESAT 552.

In one embodiment, the first table 550 and each of the second tables 552 occupy one page in physical memory 345. Thus, a conventional memory management unit in an x86 type microprocessor with paging enabled is capable of swapping the tables 550, 552 in and out of the system memory, as needed. That is, because of the multi-level arrangement of the tables 550, 552, all of the tables 552 need not be simultaneously present in the physical memory 345 for the memory system 500 to operate properly. If one of the tables 552 that is not currently located in physical memory is requested by an entry 560 in the first table 550, the conventional memory management unit (not shown) of the x86 microprocessor may read the page from main memory, such as a hard disk drive, and store the requested page 552 in the system memory where it may be accessed. This one-page sizing of the tables 550, 552 reduces the amount of system memory needed to store the multi-level lookup table 530, and reduces the amount of memory swapping needed to access memory using the tables 550, 552.

In one embodiment, each page is 4 Kbytes in size, and the system memory totals 16 Mbytes. Thus, approximately 4000 ESAT tables 552 may reside within a page. In one embodiment, the 4000 ESAT tables 552 each may contain 4000 sets of security attributes. Furthermore, the ESAT directory 550 contains the starting address for each of the 4000 ESAT tables 552. The entry 560 of the first table 550 points to the base address of the appropriate second table 552. A desired entry 580 in the appropriate second table 552 is identified by adding a second portion 552 (the table portion) of the physical address 553 to the base address 555 contained in the entry 560. In one embodiment, the entry 580 contains predetermined security attributes associated with the identified page in physical memory 345. The multi-table scheme illustrated in Figure 5A and 5B is an illustrative embodiment, those skilled in the art who have the benefit of the present disclosure may implement a variety of multi-table schemes in accordance with the present invention.

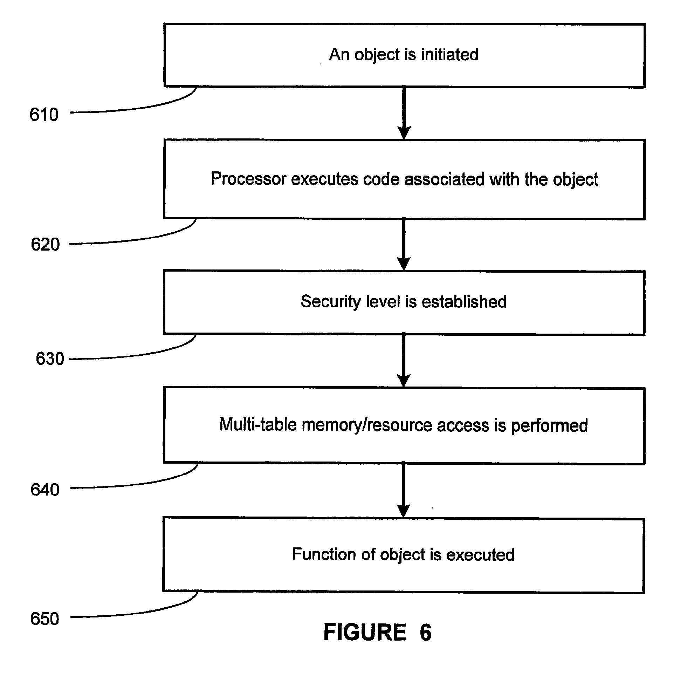

Turning now to Figure 6, a flowchart depiction of the methods in accordance with one embodiment of the present invention, is illustrated. An object 350 is initiated by the system 200 (block 610). The object 350, such as a particular software program (e.g., Microsoft Word^{®}), can be initiated by the activation of an input/output device such as a mouse 240. When the object 350 is initiated by the system 200, the processor 310 executes the code provided by the object 350 (block 620). The system 200 then establishes a security level based upon a pre-determined security level for the object 350 (block 630). The system 200 then invokes a multi-table memory/resource access (block 640). The multi-table memory/resource access performed by the system 200 is described in greater detail below. Based upon the security level that is established and the multi-level memory/resource access performed by the system 200, the function(s) of the object 350 are then executed. The functions of the object 350 may include creation of a document, execution of a communications initiated by a modem, such as a wireless modem, and the like (block 650).

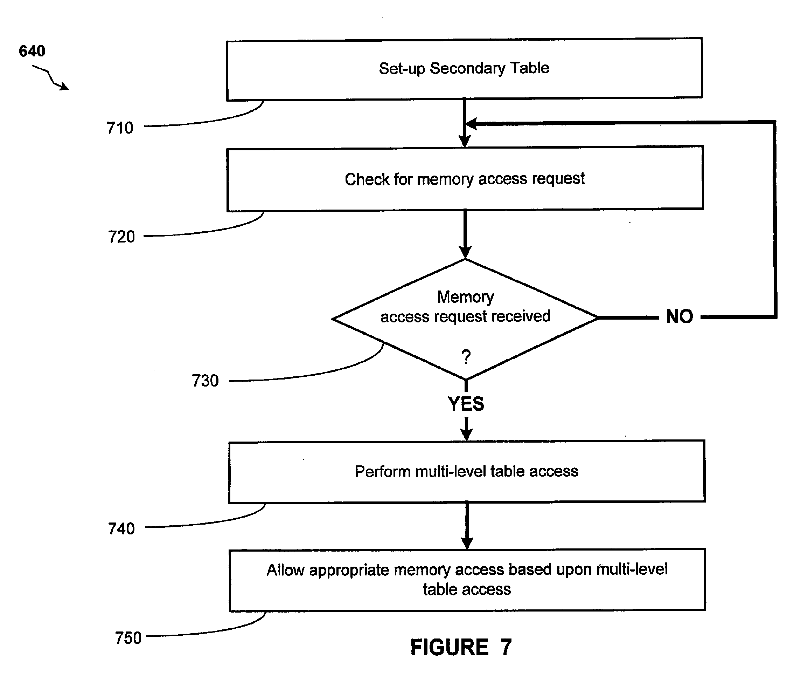

Turning now to Figure 7, a flowchart depiction of one embodiment of performing the multi-table memory/resource access, described in block 640 of Figure 6, is illustrated. The system 200 performs a secondary table set-up function (block 710). Setting-up the secondary table comprises placing and/or updating security level data in the secondary table 430. The secondary table 430 can be used to define a plurality of sections within the virtual memory access table 410. The secondary table 430 may contain data relating to entire sections of table entries (e.g., 560, 580 in Figure 5B) that may be missing from the virtual memory access table 410.

In one embodiment, the system 200 divides physical memory 345 into pages, such that the processor 310 has access to physical memory 345 based upon the pages. In one embodiment, the pages are defined to be memory sections of 4 kbytes, which is compatible with X86 processors. The virtual memory access table 410 and the secondary table 430 contain indexes into the tables 410, 430. These indexes can be used to calculate a physical address 553 that can be used to locate a particular portion of the physical memory 345. Accessing of memory using the tables 410,430, performed by the processor 310, is provided in greater detail below.

Once the system 200 sets-up the secondary table 430, the system 200 checks for memory access requests from the processor 310 (block 720). Memory access requests from the processor 310 are generally prompted by an object 350. Some objects 350 require extensive memory accesses to perform their respective tasks, such as initiating communications through a modem, retrieving data pertaining to a particular document, and the like. The system 200 makes a determination whether a memory access request was received (block 730). When the system determines that a memory access has not been received, the system 200 continues to check for memory access requests as indicated by the path from block 730 back to block 720 in Figure 7.

When the system 200 makes a determination that a memory access has been requested, the system 200 performs a multi-level table access, in accordance with one embodiment of the present invention (block 740). A more detailed description of the multi-level table access performed by the system is provided below. Once the system performs the multi-table access described in block 740, the system 200 then allows appropriate memory access in response to the multi-level table access (block 750). In other words, system 200 allows the object 350 that prompted the processor 310 to request a memory request, to actually gain access to the physical memory 345 requested by the processor 310.

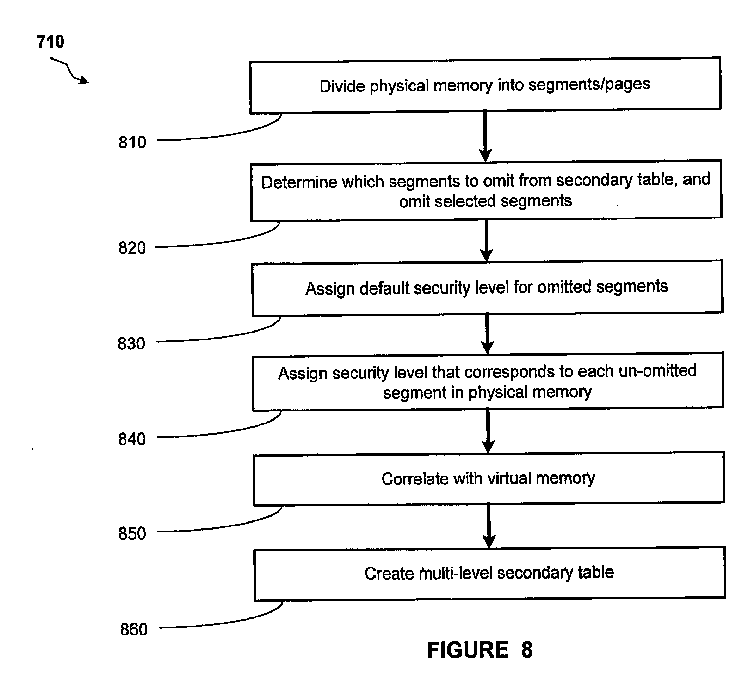

Turning now to Figure 8, one embodiment of the method of setting up the secondary table 430, as indicated in block 710 of Figure 7, is illustrated. The system 200 divides the physical memory 345 into a plurality of segments. These segments are often referred to as memory pages. In one embodiment, the segments/pages are divided into memory equivalent of four kilobytes (block 810). In one embodiment, the division of the physical memory 345 into 4 Kbytes segments can be performed by hardware processes known to those skilled in the art that have the benefit of the present disclosure. In an alternative embodiment, the division of the physical memory 345 into segments can be performed using software techniques known to those skilled in the art that have the benefit of the present disclosure.

The system 200 determines which segments to omit from the secondary table 430 and performs an omitting function (block 820). The segments that are omitted from the secondary table 430 are memory pages that can be assigned a default security level. The omitted segments comprise memory pages that can be allocated a broad-level or a low-level security level. Therefore, the system 200 assigns a default security level for omitted segments (block 830). The lowest security level is assigned to the omitted segments, therefore the omitted segments can be accessed by virtually any software object 350 that prompts the processor 310 to access memory.

The system 200 then assigns a security level that corresponds to each un-omitted segment/page in the physical memory 345 (block 840). The system 200 assigns a security level to the memory pages based upon expected accesses by particular objects 350 via the processor 310. The system 200 protects certain hardware devices and other memory locations in the processor unit 210 while assigning appropriate security levels to the un-omitted segments/pages.

Once the security levels are assigned, the system 200 correlates particular segments/pages with the virtual memory 342 (block 850). Virtual memory addresses may point to particular physical memory segments 345 based upon particular security levels. The system 200 then utilizes the correlation of virtual memory 342 to segments in the physical memory 345 to create a multi-level secondary table 430 (block 860). In one embodiment, particular spaces in the secondary table 430 are omitted in order to save memory resources. As described above, the omitted memory locations are assigned a default security level, which is generally the lowest security level.

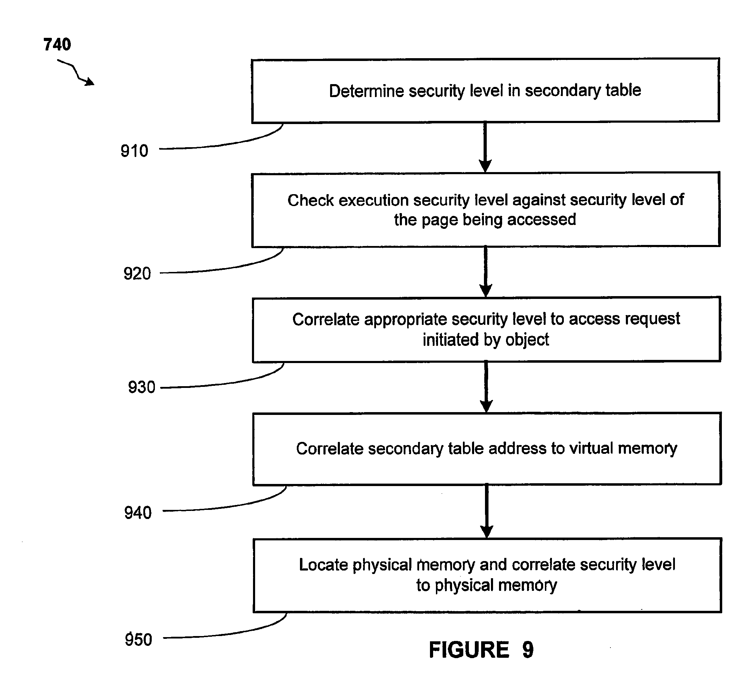

Turning now to Figure 9, one embodiment of performing the multi-level table access process indicated in block 740 of Figure 7, is illustrated. After receiving a request for memory access, the system 200 determines a security level in the secondary table in response to the requested memory access (block 910). The system 200 determines the security level in the secondary table 430 based upon the memory access in response to an indication to the processor 310 regarding a type of object 350 that initiates the execution of software in the processor 310. Certain software objects 350 require a more high-level security access that allows access to certain sensitive data in memory, and/or access to input/output devices in the processor unit 310. For example, a software object 350 that requires a communication transfer of data would require a high-security level clearance in order to access sensitive data from the processor unit 310. In contrast, a software object 350 that performs the function of a data processor, such as Microsoft Word^{®}, would require a low-level of security clearance to perform its task.

The system 200 then examines the execution security level of the software object 350 initiating the memory access request, and the security level of the page that is the target of the memory access (block 920). The processor 310 compares the security level of the currently executing software object 350 against the security level of the page that is the target of the memory access, in order to determine a match (*i.e*., whether to allow the requested memory access). This prevents certain software objects 350 that are unauthorized to access certain sensitive data in physical memory 345, from accessing and controlling certain memory locations. The system 200 then correlates the appropriate security level to the particular access request initiated by the software object 350 (block 930).

The system 200 then correlates a secondary table address to the virtual memory 342 that corresponds to a location in the physical memory 345. The system 200 locates the physical memory 345 and correlates the appropriate security level to the physical memory page (block 950). In one embodiment, the memory access interface 320 performs the locating of the virtual memory 342 and the correlation of the virtual memory 342 to a location in the physical memory 345.

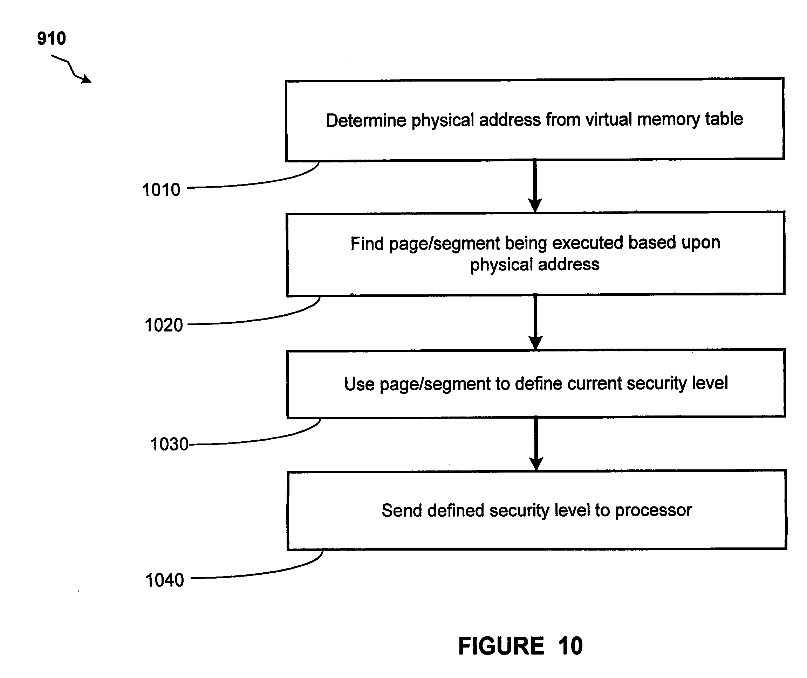

Turning now to Figure 10, one embodiment of determining the security level in the secondary table 430 in response to a memory access request of the processor 310, as indicated in block 910 of Figure 9, is illustrated. The system 200 determines the physical address 553 that is responsive to the memory access request from the virtual memory access table 410 (block 1010). The system 200 then locates the memory segment/page that is being executed by the processor 310 responsive to the software object 350, based upon the physical address 553 (block 1020). The system 200, when executing code based upon the software object 350, determines the security level of the page from which the processor 310 is executing, which can define the current security level. Therefore, the system 200 effectively uses the memory segment/page to define the security level (block 1040). The system 200 then sends the defined security level to the processor 310 to perform a proper memory access (block 1030). The completion of the steps illustrated in Figure 10 substantially completes the step of determining security level in the secondary table as indicated in the block 910 of Figure 9.

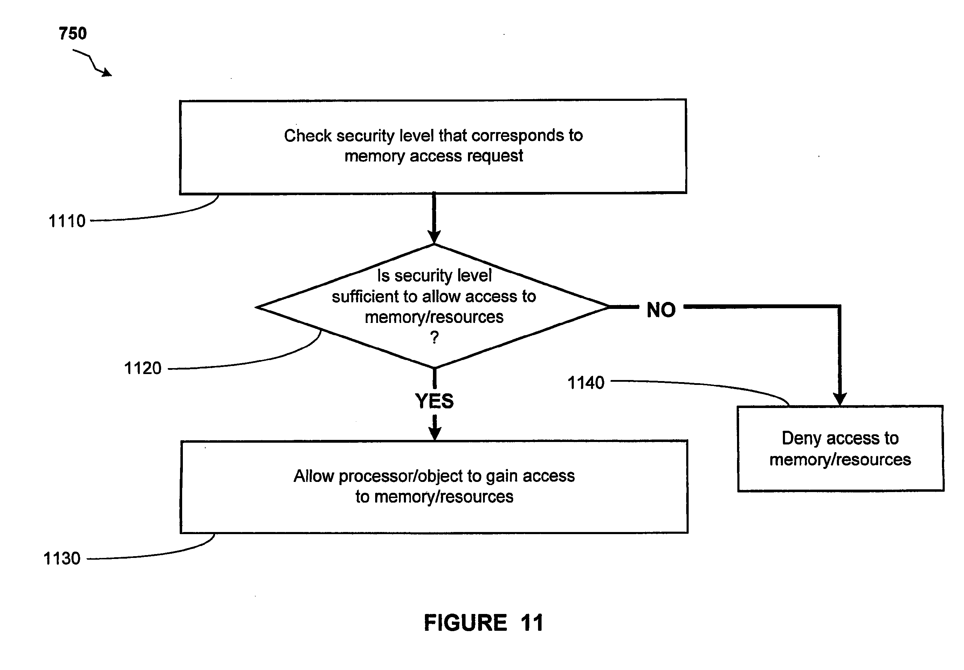

Turning now to Figure 11, a flowchart depiction of one embodiment of the steps for performing the appropriate memory access described in block 750 of Figure 7 is illustrated. The system 200 checks the security level that corresponds to a particular memory access request (block 1110). The security level can be correlated with a particular memory request based upon the particular software object 350 being executed by the processor 310. The system 200 then determines whether the security level is sufficient to allow access to the memory/resources (block 1120). The system 200 checks to see if the security level clearance is appropriate to allow the memory access requested by the processor 310 and gain access to particular memory locations.

When the system 200 determines that the security level is not high enough to allow memory/resources access based upon a particular memory access request made by the processor 310, the system 200 denies the requested memory/resources access (block 1140). When the system 200 determines that the security level is indeed sufficient to allow the requested memory/resources access, the system 200 allows the processor 310 or the software object 350 to gain access to a particular memory location in the physical memory 345 (block 1130). The completion of the steps indicated in Figure 11 substantially completes the process of allowing the appropriate memory access as indicated in block 750 of Figure 7. The principles taught by the present invention can be implemented into other types of automated frameworks.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Accordingly, the protection sought herein is as set forth in the claims below.

## Claims

1. A method, comprising:
executing a software object (350);
establishing a security level for said software object (350);
performing a multi-table memory access using at least one of said security levels; and
executing a function of said object (350),
**characterised by**
associating a physical address for performing a memory access associated with executing said software object (350);
said security level for said software object (350) being established using said physical address;
a secondary table (430) being provided;
said secondary table (430) being used in performing the multi-table memory access using said security level.

2. A method as claimed in claim 1, wherein establishing a security level for said software object (350) further comprises assigning a security level relating to a memory access of at least a portion of a memory.

3. A method as claimed in claim 1, wherein performing a multi-table memory access using said security level further comprises:
establishing a secondary table (430);
receiving a memory access request based upon executing of said software object (350);
performing a multi-level table access based upon said memory access request using said secondary table (430) and at least one virtual memory table (410); and
accessing a portion of a memory based upon said multi-level table access.

4. A method as claimed in claim 3, wherein establishing a secondary table (430) further comprises:
dividing a physical memory (345) into a plurality of segments;
determining at least one of said segment to omit from said secondary table (430) and at least one un-omitted segment; assigning a default security level to said omitted segment;
assigning a security level to said un-omitted segment; and
correlating at least one assigned segment with a virtual memory location.

5. A method as claimed in claim 3, wherein performing a multi-level table access based upon said memory access request further comprises:
determining at least one security level that corresponds to a segment in said secondary table (430);
verifying a match between an execution security level to a security level associated with a segment being accessed in response to an execution of said object (350);
determining a virtual memory address based upon said secondary table (430) in response to a match between said execution security level and said security level associated with said segment being accessed; and
locating a physical memory location corresponding to said virtual memory address.

6. A method as claimed in claim 5, wherein determining at least one security level that corresponds to a segment in said secondary table (430) comprises:
determining a physical address (553) from said virtual memory table (410);
determining a segment being executed based upon said physical address (553); and
defining a current security level based upon said determining of said segment being executed.

7. An apparatus, for performing virtual memory access, the apparatus comprising:
a processor (310) coupled to a bus (315);
means for coupling at least one software object (350) to said processor (310);
a memory unit (340); and
a memory access interface (315) coupled to said bus (315) and said memory unit (340), said memory access interface (315) adapted to associate a physical address for providing memory access and adapted to provide said processor (310) a multi-level table memory access associated with said physical address based upon at least one security level, in response to said processor (310) executing said software object (350).

8. The apparatus of claim 7, wherein said memory access interface (315) comprises a virtual memory access table (410) coupled with a secondary table (430), said memory access interface (315) to provide a virtual memory addressing scheme to access at least one portion of said memory unit (340) based upon a security level.

9. A computer readable program storage device encoded with instructions that, when executed by a computer, performs a method, comprising:
executing a software object (350);
associating a physical address for performing a memory access associated with executing said software object (350);
establishing a security level for said software object (350) based upon said physical address;
establishing a secondary table (430);
receiving a memory access request based upon executing of said software object (350);
determining at least one security level that corresponds to a segment in said secondary table (430);
verifying a match between an execution security level to a security level associated with a segment being accessed in response to an execution of said software object (350);
determining a virtual memory address based upon said secondary table (430) in response to a match between said execution security level and said security level associated with said segment being accessed; and
locating a physical memory location corresponding to said virtual memory address and accessing a portion of a memory based upon locating said physical memory location.

10. The computer readable program storage device of claim 9, wherein determining at least one security level that corresponds to a segment in said secondary table (430) comprises:
determining a physical address (553) from said virtual memory table (410);
determining a segment being executed based upon said physical address (553); and
defining a current security level based upon said determining of said segment being executed.

## Patentansprüche

1. Verfahren, umfassend:
Ausführen eines Software-Gegenstandes (350);
Einrichten einer Sicherheitsstufe für den Software-Gegenstand (350);
Durchführen eines Mehrfachtabellen-Speicherzugriffs unter Verwendung wenigstens einer der Sicherheitsstufen; und
Ausführen einer Funktion des Gegenstandes (350),
**gekennzeichnet durch**
Zuordnen einer physikalischen Adresse für die Durchführung eines Speicherzugriffs, der der Ausführung des Software-Gegenstandes (350) zugeordnet ist;
wobei die Sicherheitsstufe für den Software-Gegenstand (350) unter Verwendung der physikalischen Adresse eingerichtet wird;
eine sekundäre Tabelle (430) bereitgestellt ist und
die sekundäre Tabelle (430) bei der Durchführung des Mehrfachtabellen-Speicherzugriffs unter Verwendung der Sicherheitsstufe verwendet wird.

2. Verfahren nach Anspruch 1 » bei dem das Einrichten einer Sicherheitsstufe für den Software-Gegenstand (350) weiterhin das Zuweisen einer Sicherheits stufe beinhaltet» die sich auf einen Speicherzugriff wenigstens eines Teils eines Speichers bezieht

3. Verfahren nach Anspruch 1 « bei dem das Durchführen eines Merfachtabellen-Speicherzugriffs unter Verwendung der Sicherheitsstufe weiterhin umfasst:
Einrichten einer sekundären Tabelle (430);
Empfangen einer Speicherzugriffsanfrage auf der Basis der Ausführung des Softv/are-Gegenstandes (350);
Durchführen eines Mehrfachebenen-Tabellenzugriffs auf der Basis der Speicherzugriffsanfrage unter Verwendung der sekundären Tabelle (430) und wenigstens einer Virtuellspeichertabelle (410); und
Zugreifen auf einen Teil eines Speichers auf der Basis des Mehrfachebenen-Tabellenzugriffs.

4. Verfahren nach Anspruch 3, bei dem das Einrichten einer sekundären Ta belle (430) weiterhin umfasst:
Unterteilen eines physikalischen Speichers (345) in eine Vielzahl von Segmenten;
Bestimmen wenigstens eines der Segmente für das Fortfallen aus der sekundären Tabelle (430) und wenigstens eines nicht fortgefallenen Segmentes;
Zuweisen einer voreingestellten Sicherheitsstufe zu dem fortgefallenen Segment;
Zuweisen einer Sicherheitsstufe zu dem nicht fortgefallenen Segment; und
Korrelieren wenigstens eines zugewiesenen Segmentes mit einem Ort im virtuellen Speicher.

5. Verfahren nach Anspruch 3, bei dem das Durchführen eines Mehrfachebe nen-Tabellenzugriffs auf der Basis der Speicherzugriffsanfrage weiterhin umfasst:
Bestimmen wenigstens einer Sicherheitsstufe, die einem Segment in der sekundären Tabelle (430) entspricht;
Verifizieren einer Übereinstimmung zwischen einer Ausführungssicherheitsstufe und einer Sicherheitsstufe, die einem Segment zugeordnet ist, auf das in Erwiderung einer Ausführung des Gegenstandes (350) zugegriffen wird;
Bestimmen einer Adresse des virtuellen Speichers auf der Basis der sekundären Tabelle (430) in Erwiderung auf eine Übereinstimmung zwischen der Ausführungssicherheitsstufe und der Sicherheitsstufe, die dem Segment zugeordnet ist, auf das zugegriffen wird; und
Lokalisieren eines Ortes im physikalischen Speicher, der der Adresse des virtuellen Speichers entspricht.

6. Verfahren nach Anspruch 5, bei dem das Bestimmen der wenigstens einen Sicherheitsstufe» die einem Segment in der sekundären Tabelle (430) entspricht» umfasst;
Bestimmen einer physikalischen Adresse (553) aus der Virtuellspeichertabelle (410);
Bestimmen eines Segmentes, das auf der Basis der physikalischen Adresse (553) ausgeführt wird; und
definieren einer momentanen Sicherheitsstufe auf der Basis der Bestimmung des Segmentes» das ausgeführt wird,

7. Gerät zur Ausführung eines Zugriffs auf einen virtuellen Speicher» wobei das Gerät enthält:
einen Prozessor (310), der mit einem Bus (315) gekoppelt ist;
eine Einrichtung zum Koppeln wenigstens eines Software-Gegenstandes (350) mit dem Prozessor (310);
eine Speichereinheit (340); und
eine Speicherzugriffsschnittstelle (315), die mit dem Bus (315) und der Speichereinheit (340) gekoppelt ist, wobei die Speicherzugriffsschnittstelle (315) dazu eingerichtet ist» eine physikalische Adresse zuzuordnen, um einen Speicherzugriff bereitzustellen, und dazu eingerichtet ist, dem Prozessor (310) einen Mehrfachebenentabellen-Speicherzugriff, der der physikalischen Adresse zugeordnet ist» auf der Basis wenigstens einer Sicherheitsstufe in Erwiderung darauf bereitzustellen, dass der Prozessor (310) den Software-Gegenstand (350) ausführt.

8. Gerät nach Anspruch 7, bei dem die Speicherzugriffsschnittstelle (315) eine Virtuellspeicherzugriffstabelle (410) enthält, die mit einer sekundären Tabelle (430) gekoppelt ist, wobei die Speicherzugriffsschnittstelle (315) ein Virtuellspeicher-Adressierschema bereitstellt, um auf wenigstens einen Tei! der Spei chereinheit (340) auf der Basis einer Sicherheifsstufe zuzugreifen.

9. Speichervorrichtung für ein computerlesbares Programm, die mit Anwei sungen codiert ist, die, wenn sie von einem Computer ausgeführt werden, ein Verfahren ausführen, das umfasst:
Ausführen eines Software-Gegenstandes (350);
Zuordnen einer physikalischen Adresse für die Durchführung eines Speicherzugriffs, der der Ausführung des Software-Gegenstandes (350) zugeordnet ist;
Einrichten einer Sicherheitsstufe für den Software-Gegenstand (350) auf der Basis der physikalischen Adresse;
Einrichten einer sekundären Tabelle (430);
Empfangen einer Speicherzugriffsanfrage auf der Basis der Ausführung des Software-Gegenstandes (350);
Bestimmen wenigstens einer Sicherheitsstufe, die einem Segment in der sekundären Tabelle (430) entspricht;
Verifizieren einer Übereinstimmung zwischen einer Ausführungssicherheitsstufe und einer Sicherheitsstufe, die einem Segment zugeordnet ist, auf das in Erwiderung einer Ausführung des Software-Gegenstandes (350) zugegriffen wird;
Bestimmen einer Virtuellspeicheradresse auf der Basis der sekundären Tabelle (430) in Erwiderung auf eine Übereinstimmung zwischen der Ausführungssicherheitsstufe und der Sicherheitsstufe, die dem Segment zugeordnet ist, auf das zugegriffen wird; und
Lokalisieren eines Ortes in dem physikalischen Speicher, der der Virtuellspeicheradresse entspricht, sowie Zugreifen auf einen Teil eines Speichers auf der Basis der Lokalisierung dieses Ortes im physikalischen Speicher.

10. Speichervorrichtung für ein computerlesbares Programm nach Anspruch 9, bei der das Bestimmen wenigstens einer Sicherheitsstufe, die einem Segment in der sekundären Tabelle (430) entspricht, umfasst:
Bestimmen einer physikalischen Adresse (553) aus der Virtuellspeichertabelle (410);
Bestimmen eines Segmentes, das auf der Basis der physikalischen Adresse (553) ausgeführt wird; und
Definieren einer momentanen Sicherheitsstufe auf der Basis der Bestimmung des Segmentes, das ausgeführt wird.

## Revendications

1. Procédé comprenant :
l'exécution d'une cible logicielle (350) ;
l'établissement d'un niveau de sécurité pour ladite cible logicielle (350) ;
la réalisation d'un accès à une mémoire à plusieurs tables en utilisant au moins l'un desdits niveaux de sécurité ; et
l'exécution d'une fonction de ladite cible (350) ;
**caractérisé par** le fait de
associer une adresse physique en vue de réaliser un accès à une mémoire associé à l'exécution de ladite cible logicielle (350) ;
ledit niveau de sécurité correspondant à ladite cible logicielle (350) étant établi en utilisant ladite adresse physique ;
une table secondaire (430) étant fournie ;
ladite table secondaire (430) étant utilisée en exécutant l'accès à la mémoire à plusieurs tables en utilisant ledit niveau de sécurité.

2. Procédé selon la revendication 1, dans lequel l'établissement d'un niveau de sécurité pour ladite cible logicielle (350) comprend, de plus, le fait d'assigner un niveau de sécurité concernant un accès mémoire à au moins une partie de la mémoire.

3. Procédé selon la revendication 1, dans lequel l'exécution d'un accès à la mémoire à plusieurs tables en utilisant ledit niveau de sécurité comprend, de plus, le fait de :
établir une table secondaire (430) ;
recevoir une requête d'accès à la mémoire sur la base de l'exécution de ladite cible logicielle (350) ;
exécuter un accès à des tables de niveaux multiples sur la base de ladite requête d'accès en mémoire en utilisant ladite table secondaire (430) et au moins une table de la mémoire virtuelle (410) ; et
accéder à une partie d'une mémoire sur la base dudit accès à des tables de niveaux multiples.

4. Procédé selon la revendication 3, dans lequel l'établissement d'une table secondaire (430) comprend, de plus, le fait de :
diviser une mémoire physique (345) en une pluralité de segments ;
déterminer au moins l'un desdits segments à éliminer à partir de ladite table secondaire (430) et au moins un segment non éliminé ; assigner un niveau de sécurité par défaut au dit segment éliminé ;
assigner un niveau de sécurité au dit segment non éliminé ; et
corréler au moins un segment assigné avec une position en mémoire virtuelle.

5. Procédé selon la revendication 3, dans lequel l'exécution d'un accès à des tables de plusieurs niveaux sur la base de ladite requête d'accès en mémoire comprend, de plus, le fait de :
déterminer au moins un niveau de sécurité qui correspond à un segment dans ladite table secondaire (430) ;
vérifier une coïncidence entre un niveau de sécurité d'exécution et un niveau de sécurité associé à un segment auquel on accède en réponse à une exécution de ladite cible (350) ;
déterminer une adresse de la mémoire virtuelle sur la base de ladite table secondaire (430) en réponse à une coïncidence entre ledit niveau de sécurité d'exécution et ledit niveau de sécurité associé audit segment auquel on a eu accès ; et
localiser une position de mémoire physique correspondant à ladite adresse de mémoire virtuelle.

6. Procédé selon la revendication 5, dans lequel la détermination d'au moins un niveau de sécurité qui correspond à un segment dans ladite table secondaire (430) comprend le fait de :
déterminer une adresse physique (553) à partir de ladite table de mémoire virtuelle (410) ;
déterminer un segment à exécuter sur la base de ladite adresse physique (553) ; et
définir un niveau de sécurité en cours sur la base de ladite détermination dudit segment à exécuter.

7. Equipement pour exécuter un accès à la mémoire virtuelle, l'équipement comportant :
un processeur (310) couplé à un bus (315) ;
des moyens pour coupler au moins une cible logicielle (350) au dit processeur (310) ;
une unité de mémoire (340) ; et
une interface d'accès à la mémoire (315) couplée au dit bus (315) et à ladite unité de mémoire (340), ladite interface d'accès en mémoire (315) étant adaptée pour associer une adresse physique afin de fournir un accès à la mémoire et adaptée pour fournir au dit processeur (310) un accès à la mémoire à tables de plusieurs niveaux associé à ladite adresse physique sur la base d'au moins un niveau de sécurité, en réponse au dit processeur (310) qui exécute ladite cible logicielle (350).

8. Appareil selon la revendication 7,dans lequel ladite interface d'accès en mémoire (315) comprend une table d'accès à la mémoire virtuelle (410) couplée à une table secondaire (430), ladite interface d'accès à la mémoire (315) pour fournir un schéma d'adressage en mémoire virtuelle afin d'accéder à au moins une partie de ladite unité de mémoire (340) sur la base d'un niveau de sécurité.

9. Dispositif de stockage de programme exploitable par ordinateur codé avec des instructions qui, lorsqu'elles sont exécutées par un ordinateur, réalise un procédé comprenant le fait de :
exécuter une cible logicielle (350) ;
associer une adresse physique permettant d'exécuter un accès en mémoire associé à l'exécution de ladite cible logicielle (350) ;
établir un niveau de sécurité pour ladite cible logicielle (350) sur la base de ladite adresse physique ;
établir une table secondaire (430) ;
recevoir une requête d'accès en mémoire sur la base de l'exécution de ladite cible logicielle (350) ;
déterminer au moins un niveau de sécurité qui correspond à un segment dans ladite table secondaire (430) ;
vérifier une coïncidence entre un niveau de sécurité d'exécution et un niveau de sécurité associé avec un segment auquel on accède en réponse à une exécution de ladite cible logicielle (350) ;
déterminer une adresse en mémoire virtuelle sur la base de ladite table secondaire (430) en réponse à une coïncidence entre ledit niveau de sécurité d'exécution et ledit niveau de sécurité associé au dit segment auquel on a eu accès ; et
localiser une position en mémoire physique correspondant à ladite adresse de mémoire virtuelle et accéder à une partie d'une mémoire sur la base de la localisation de ladite position en mémoire physique.

10. Dispositif de stockage de programme exploitable par ordinateur selon la revendication 9, dans lequel la détermination d'au moins un niveau de sécurité qui correspond à un segment dans ladite table secondaire (430) comprend le fait de :
déterminer une adresse physique (553) à partir de ladite table de mémoire virtuelle (410) ;
déterminer un segment à exécuter sur la base de ladite adresse physique (553) ; et
définir un niveau de sécurité en cours sur la base de ladite détermination dudit segment à exécuter.
